# EUROPEAN PATENT APPLICATION

(11) **EP 3 354 691 A1**
(43) Date of publication of application: **01.08.2018**
(21) Application number: 16910787.7
(22) Date of filing: 23.12.2016
(51) Int. Cl.: C08L 83/04

(54) **METHOD FOR REGULATING AND MODIFYING POLYMER**

(30) Priority: 01.12.2016 CN 201611096454
(71) Applicant: Huazhong University of Science and Technology, Wuhan City Hubei 430074 (CN)
(72) Inventor: WU, Zhigang, Wuhan Hubei 430074 (CN); ZHENG, Shengxi, Wuhan Hubei 430074 (CN); ZHANG, Shuo, Wuhan Hubei 430074 (CN)
(74) Representative: Straus, Alexander
(86) International application number: PCT/CN2016/111646
(87) International publication number: WO 2018/098869

(57) **Abstract**

The invention discloses a method for regulating and modifying a polymer and belongs to the field of macromolecular materials. The method comprises: adding an addition material to the addition polymerization system of the polymer to tune the cross-linking degree of the polymer, reinforce or weaken the cross-linked structure of the polymer and restrain or liberate the space structure of the polymer molecule so as to regulate or modify properties of the polymer, wherein the addition polymerization system of the polymer takes a catalyst Pt as catalyst to catalyze the polymer monomer to generate nucleophilic addition reaction, and the addition material is a macromolecule with an organic amine group, or a macromolecule with a sulfur-containing functional group, or a macromolecule with a nitrogen lone electron pair, or a macromolecule with a functional group having extremely strong electronegativity to enable nucleophilic reaction. In the method according to the invention, uncontrolled cross-linking at the chemical molecular level is turned into controlled cross-linking such that the addition polymerization polymer material can be regulated and modified as expected.

## Description

### TECHNICAL FIELD

The invention relates to the field of macromolecular polymer materials, and in particular to a method for simply and effectively modifying the properties of a polymer with a synthesis mechanism in which the nucleophilic cross-linking reaction is catalyzed by a catalyst.

### TECHNICAL BACKGROUND

At present, there are many types of macromolecular silicone rubber, which are widely used. For example, the addition type liquid silicone rubber is mainly a rubber material made of vinyl-terminated polydimethylsiloxane as base, polymethylsiloxane containing a dimethyl chain unit and a methyl hydrogen chain unit as a cross-linking agent and a platinum complex as a cross-linking catalyst. Under catalysis of the catalyst, the rubber is subjected to an addition reaction at room temperature or under heating, thereby obtaining silicone rubber with a network structure. The most commonly used silicone rubber is polydimethylsiloxane (hereinafter referred to as "PDMS"), which is a high-molecular thermosetting material and which due to its excellent and stable properties is widely used in the fields of chemistry, biology and materials.

There are many classification methods for the silicone rubber, and generally the silicone rubber may be classified into solid silicone rubber and liquid silicone rubber according to the phase before curing, may be classified into room temperature vulcanized silicone rubber and high temperature vulcanized silicone rubber according to the vulcanization temperature, and may be classified into methyl vinyl silicone rubber, methyl phenyl vinyl silicone rubber, fluorinated silicone rubber, nitrile silicone rubber and so on according to different types of the used monomers, and may be divided into general-purpose silicone rubber, ultra-low temperature resistance type silicone rubber, ultra-high temperature resistance type silicone rubber, high-strength silicone rubber, oil-resistant silicone rubber, medical silicone rubber and so on according to different properties and applications.

The silicone rubber may my synthesized in various ways. For example, some silicone rubber is synthesized through hydrolytic condensation under acid catalysis, some silicone rubber is synthesized under base catalysis, some silicone rubber is synthesized under catalysis of ferric trichloride, some silicone rubber is synthesized under catalysis of a vulcanizing agent, some silicone rubber is synthesized with platinum complex as a catalyst, and some silicone rubber is synthesized with organic tin and titanium compound as a catalyst. Both the industrial synthesis and the relatively mild laboratory synthesis require a certain condition such as catalyst or heating and pressurizing.

There are many types of thermosetting macromolecular polymer silicone rubbers. For example, the most commonly used thermosetting macromolecular polymer silicone rubber has two components including a monomer A and a curing agent B; the thermosetting macromolecular polymer silicone rubber can also have three components including a monomer A, a curing agent B and a diluent C; and the thermosetting macromolecular polymer silicone rubber may also have a single component. The silicone rubbers with different components have different reaction principles. For example, there arc condensation cross-linking under catalysis of organic tin and titanium compound, addition cross-linking under catalysis of platinum and cross-linking reaction under the condition that the organic peroxide is decomposed at high temperature to generate high-activity free radicals.

The silicone rubber has an extensive application, and for example, is applied to the micro-channel system by the soft lithography in the biological micro-electromechanical system. A micro-channel structure is designed on a silicon wafer, and then liquid dimethyl siloxane is poured onto the silicon wafer and heated such that the PDMS is hardened. Then, the silicon wafer is removed so as to form a micron-sized micro-channel on the PDMS. Finally, hydrophilic surface modification is performed on the PDMS and the glass slide by is treated by corona treatment to allow the surface bond structure to be destroyed, and then the chemical bonds of the PDMS and the glass slide is bonded to a normal state again, so that the glass slide and the PDMS are permanently bonded (Xia Y, Whitesides G M. Soft lithography [J]. Annual review of materials science, 1998, 28(1): 153-184.). After this technology is proposed, the micro-channel, micro-mixer, micro-pump, micro-valve and other components can be manufactured at low costs and the minimum geometric dimension may reach up to the nanometer scale.

In addition, the PDMS is easy to concentrate on the interface on the air side such that the material forms a hydrophobic self-protective coating, and thus it may be used for producing fibers to improve the anti-fouling and anti-scaling performance, it is more commonly used for producing the hydrophobic surface to obtain materials with low water absorption, and also can be used as a protection coating. In a word, the PDMS has been widely used in the fields of micro-fluidics, biochemistry, biomedicine and other fields (Weibel D B, Whitesides G M. Applications of microfluidics in chemical biology[J]. Current opinion in chemical biology, 2006, 10(6): 584-591.).

The PDMS is essentially a macromolecular polymer, and its forming process is a catenation reaction between the monomer and the curing agent, in which the dimethyl silicone oil as the monomer is a short-chain molecule with double bonds on both ends of the chain, while the curing agent may have hydrogen atoms on the side chain and methyl groups on both ends of the chain. During stirring, under catalysis of a platinum-based catalyst, double bonds of the monomer may be opened and then bonded to the hydrogen atoms on the curing agent to form a chain. In this way, an irregular high-polymerization-degree molecule with a space structure is gradually formed. That is, the cross-linking and curing process of the PDMS is an addition nucleophilic reaction under catalysis of the platinum-based catalyst.

There are many surface modification methods for the silicone rubber such as laser modification (Khorasani M T, Mirzadeh H, Sammes P G. Laser induced surface modification of polydimethylsiloxane as a super-hydrophobic material [J]. Radiation Physics and Chemistry, 1996, 47(6): 881-888.) and chemical modification (Nagase Y, Mori S, Matsui K. Chemical modification of poly (substituted-acetylene). IV. Pervaporation of organic liquid/water mixture through poly (1-plienyl-1-propyne)/polydimethylsiloxane graft copolymer membrane [J]. Journal of applied polymer science, 1989, 37(5): 1259-1267.). In addition to modifying the hydrophilia and hydrophobicity of the surface, there are some methods to modify silicone rubber from the internal molecular. Some photo-inhibitors (e.g., benzophenone) are mixed into the silicone rubber mixture, and forms active groups to chemically react with the double bonds of the monomer and the hydrogen atoms on the side chain of the curing agent under the irradiation of UV light, which prevents the cross-linking between the monomer and the curing agent and reduces the cross-linking degree. After curing, the part irradiated by the UV light exhibits low cross-linking degree, low Young's modulus and is softer than the untreated region, so that modification of Young's modulus is achieved. (Cotton D P J, Popel A, Graz I M, et al. Photopatterning the mechanical properties of polydimethylsiloxane films [J]. Journal of Applied Physics, 2011, 109(5): 054905.). Some chemical reagents, such as a platinum blocking agent, may also limit the activity of the PDMS in the cross-linking process, which slows down the cross-linking and curing speed of the PDMS, and thus temporary modification effect is achieved (Muth J T, Vogt D M, Truby R L, et al. Embedded 3D printing of strain sensors within highly stretchable elastomers [J]. Advanced Materials, 2014, 26(36): 6307-6312.). Additionally, there are many other optical, chemical and physical modification methods.

The modified silicone rubber can be used to manufacture stretchable flexible electronic devices. The stretchable electronics belongs to a large field and can be summarized as an emerging electronic technology for producing an electronic device made of organic/inorganic material on a flexible and stretchable plastic/thin metal substrate. The stretchable electronics has a wide application prospect in the fields of information, energy, medical treatment, national defense and the like due to its unique flexibility/stretchability and high-efficiency and low-cost manufacturing process. For example, the stretchable electronics can be applied in a flexible electronic display, an organic light-emitting diode (OLED), a printing RFID, a thin-film solar cell panel, electronic newspapers, electronic skin, artificial muscles and the like (Rogers J A, Someya T, Huang Y. Materials and mechanics for stretchable electronics[J]. Science, 2010, 327(5973): 1603-1607.). The stretchable electronics can also be applied in combination with the biomedicine. Further, for example, the epidermal electronic device, which can be regarded as a device and also a system, is an electronic circuit packaged by a stretchable and flexible substrate and has a feedback function or a real-time monitoring function of predicting the corresponding external change according to change of some electrical indexes of the device itself. The epidermal electronic system is applied from the simple device (such as an electronic tattoo and a mechanical sensor) to the complex device (such as the electronic skin). The above stretchable electronic devices are all based on flexible, ductile and stretchable substrates, or based on macromolecular material substrates or based on thin metal film substrates. As for the middle circuit structure layer, it may be a micron-scale or even nano-scale metal layer deposited by an atomic deposition method, and can also be extremely thin metal wires. In short, the overall structure in the later stage can be modified as needed.

When the silicone rubber is applied to the stretchable and flexible electronic technology, in order to prepare various silicone rubber substrates with different flexibility and stretchability as needed, it is desired to develop a method for regulating and modifying a polymer substrate material.

### SUMMARY OF THE INVENTION

In view of the above-described defects or improvement requirements in the prior art, the invention provides a method for controlling and modifying a polymer, which aims at affecting the catalytic effect of the catalyst used by adding an addition material to the addition polymerization system to influence the polymerization reaction so as to affect the properties of the polymer, and to achieve a desired adjustment of the properties of the polymer by controlling the concentration and structure of the addition material and the reaction conditions. The invention is capable of controlling and modifying the addition polymerization polymer material according to the needs by means of turning uncontrolled cross-linking at the chemical molecular level into a controlled cross-linking.

To achieve the above objective, in accordance with one aspect of the invention, there is provided a method for controlling and modifying a polymer, characterized by adding an addition material to the addition polymerization system of the polymer to change the degree of cross-linking of the polymer, to reinforce or to weaken the cross-linked structure of the polymer and to restrain or to liberate the space structure of the polymer molecule so as to regulate or modify of properties of the polymer.

In the polymerization system a Pt catalyst is used as the catalyst so as to catalyze a nucleophilic addition reaction by polymer monomer. The addition material is a macromolecule with an organic amine group, or a macromolecule with a sulfur-containing functional group, or a macromolecule with a nitrogen lone electron pair, or a macromolecule with a functional group having an extremely strong electronegativity to enable a nucleophilic reaction, and the addition material exhibits a macromolecular chain structure.

The macromolecular chain refers to a macromolecule having an average molecular weight of 70.000 to 200.000.

Further, the functional group having an extremely strong electronegativity to enable a nucleophilic reaction is a hydroxyl functional group having an electronegativity, strong enough to enable a nucleophilic reaction.

Further, the higher the amount of the addition material, i.e. the larger its concentration, the stronger will be the control and package in an embedded manner for the catalyst Pt is, the more the cross-linking degree is weakened, the more unstable will be the resulting structure, the smaller the Young's modulus of the polymer, the softer the polymer, and the larger its stretchability will be.

Further, the larger the molecular weight of the addition material, the longer the main chain and the branched chains are, the more the contained amine groups are, the more the Pt catalysis is limited, and the more the cross-linking degree is weakened.

Further, all of the mixing degree of the addition polymerization system of the polymer, the diffusion degree of the addition material, the curing temperature of the addition polymerization system of the polymer and the curing time of the addition polymerization system of the polymer are capable of affecting mechanical properties of the resulting polymer as below:
(1) the higher the mixing degree of the addition polymerization system of the polymer is, the more the diffusion degree of the addition material is, the more the catalyst Pt is wrapped by or embedded in the addition material, the more the cross-linking degree of the polymer and the cross-linking area of the polymer are weakened, the lower the Young's modulus of the polymer is, the softer the polymer is, and the larger the stretchability is;
(2) the higher the curing temperature of the addition polymerization system of the polymer is, the faster the internal chemical reaction is, the more the cross-linking degree of the polymer and the cross-linking area of the polymer are strengthened, the higher the Young's modulus of the polymer is, the stiffer the polymer is, and the smaller the stretchability is; and
(3) the longer the curing time of the addition polymerization system of the polymer is, the more thoroughly the internal chemical reaction goes on, the more the cross-linking degree of the polymer and the cross-linking area of the polymer are strengthened, the higher the Young's modulus of the polymer is, the stiffer the polymer is, and the smaller the stretchability is.

Further, under the condition that the polymer monomer mass is fixed, there is an upper limit to the regulation and modification effect achieved by the addition material, and when the addition amount of the addition material exceeds the upper limit value, the catalyst Pt is completely limited and is unable to catalyze the addition polymerization reaction.

Further, the addition material is ethoxylated polyethyleneimine, and the polymer reaction system is a polydimethylsiloxane addition polymerization system.

In general, compared with the prior art, the invention has the following advantageous effects:

In view of complex or high-cost manufacturing process of the existing flexible and stretchable substrate, the invention provides a method for fabricating a flexible/stretchable electronic substrate which is simple and convenient, capable of adjusting the properties and low-cost, and aims at tuning the flexibility, adhesion force, stretchability and Young's modulus of the macromolecular flexible material only by simple processes to tune various mechanical performance parameters as needed so as to meet the requirement for packaging the flexible/stretchable electronic device in the experiment. At present, the properties of the modified polymer can be maintained at least for one year, and thus the modified polymer has a great application prospect in the field of flexible/stretchable electronics.

The advantage of the invention is to turn uncontrolled cross-linking at the chemical molecular level into controlled cross-linking by adopting a specific addition material and a simple mixing process regulating such that the polymer can be obviously and adjustably modified in terms of mechanical properties such as flexibility, adhesion force and stretchability.

According to the invention, modification of the polymer is multifaceted, including flexibility, stretchability, adhesion force, transparency and the like. The flexibility and the Young's modulus are complementary with higher flexibility corresponding to smaller Young's modulus. The stretchability is embodied in the stretch ratio. The organic amine polymer added in the invention is beneficial to increase the adhesion force of the polymer surface and provides a very good epidermal electronic substrate.

The invention makes a great contribution to the field of flexible/stretchable electronics, in which the epidermal electronic device needs to be properly attached to the skin, and thus the invention can meet the requirement on the Young's modulus. The high-adhesion force elastic mixture with adjustable flexibility, adhesion force and Young's modulus has a high transparency, which increases the visibility of the flexible/stretchable electronic equipment and is convenient for the real-time monitoring.

### BRIEF DESCRIPTION OF THE DRAWINGS

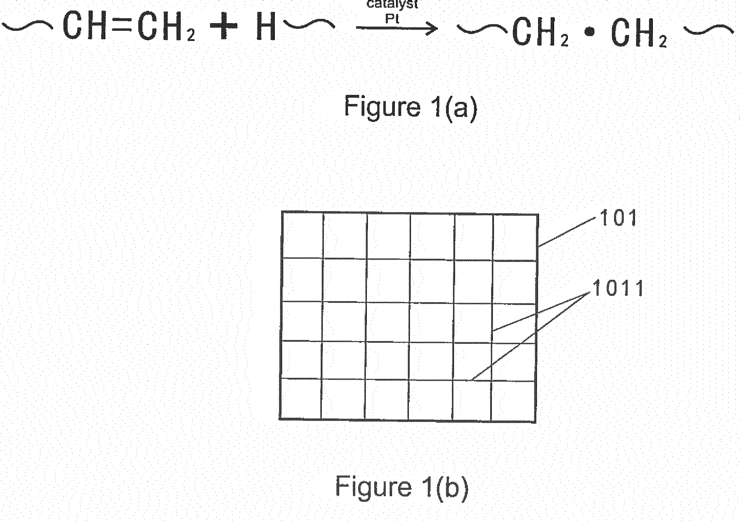

Fig. 1 is a diagram illustrating a cross-linking nucleophilic reaction with the catalysis of Pt catalyst in the formation process with the method of the invention, in which Fig. 1(a) show a chemical formula of the nucleophilic cross-linking reaction with the catalysis of Pt catalyst in the formation process with the method of the invention, and Fig. 1(b) is a structural schematic diagram of the product obtained by the nucleophilic cross-linking reaction with the catalysis of Pt catalyst in the formation process with the method of the invention.

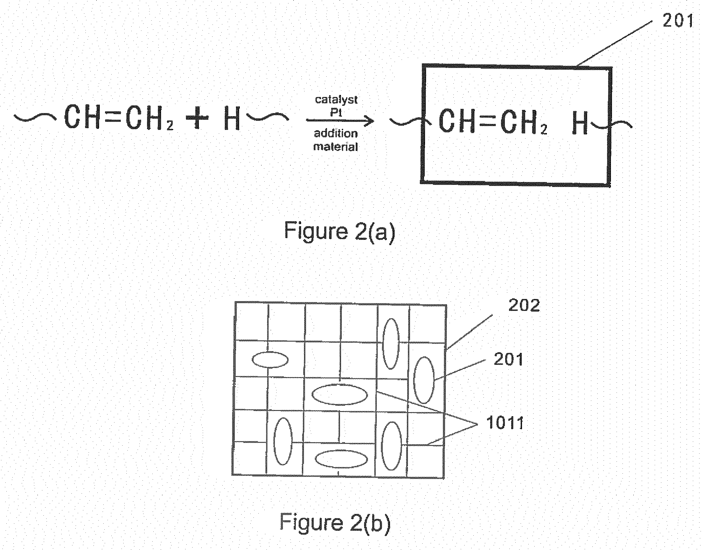

Fig. 2 is a diagram illustrating inhibition effect of the added addition material on the nucleophilic cross-linking reaction in the method according to the invention, in which a double network consists of high-polymerization and low-polymerization molecule is gradually formed. Fig. 2(a) show a chemical formula of the nucleophilic cross-linking reaction after adding the addition material in the method according to the invention, and
Fig. 2(b) is a structural schematic diagram of the product obtained by the nucleophilic cross-linking reaction after adding the addition material in the method according to the invention.

In all drawings, like reference numerals are used to designate like elements or structures, in which:
- 101:: a space three-dimensional structure of the original polymer
- 1011:: cross-linked chemical bonds in the space three-dimensional structure
- 201:: sites of action of the addition material
- 202:: a space three-dimensional structure of the regulated and modified polymer

### DETAILED DESCRIPTION OF THE PREFERRED EMBODIMENTS

For clear understanding of the objectives, features and advantages of the invention, a detailed description of the invention will be given below in conjunction with accompanying drawings and specific embodiments. It should be noted that the embodiments described herein are only meant to explain the invention, and not to limit the scope of the invention.

Fig. 1 is a diagram illustrating a nucleophilic cross-linking reaction with the catalysis of Pt catalyst in the formation process with the method of the invention, in which Fig. 1(a) show a chemical formula of the nucleophilic cross-linking reaction with the catalysis of Pt catalyst in the formation process with the method of the invention, and Fig. 1(b) is a structural schematic diagram of the product obtained by the nucleophilic cross-linking reaction with the catalysis of Pt catalyst in the formation process with the method of the invention. Fig. 2 is a diagram illustrating inhibition effect of the added addition material on the nucleophilic cross-linking reaction in the method according to the invention, in which Fig. 2(a) show a chemical formula of the nucleophilic cross-linking reaction after adding the addition material in the method according to the invention, and Fig. 2(b) is a structural schematic diagram of the product obtained by the nucleophilic cross-linking reaction after adding the addition material in the method according to the invention. In the above drawings, a space three-dimensional structure of the original polymer is designated as 101, cross-linked chemical bonds in the space three-dimensional structure are designated as 1101, sites of action of the addition material are designated as 201 and a space three-dimensional structure of the regulated and modified polymer is designated as 202.

As can be seen from the above two figures, a method for regulating and modifying a polymer according to the invention substantially comprises: adding an addition material to the addition polymerization system of the polymer to change cross-linking degree of the polymer, reinforce or weaken the cross-linked structure of the polymer and restrain or liberate the space structure of the polymer molecule so as to achieve regulation or modification of properties of the polymer, in which the addition polymerization system of the polymer takes a Pt catalyst to catalyze the polymer monomer to generate nucleophilic addition reaction, and the addition material is a macromolecule with an organic amine group, or a macromolecule with a sulfur-containing functional group, or a macromolecule with a nitrogen lone pair, or a macromolecule with a functional group having extremely strong electronegativity to enable nucleophilic reaction. The addition material has a macromolecular chain which refers to a macromolecule with an average molecular weight of 70000 to 200000, and in practical engineering practice, two macromolecules with average molecular weights of 70000 and 110000 can be adopted.

The addition material used in the method according to the invention is ethoxylated polyethylenimine (hereinafter referred to as "PEIE"). The PEIE is a long chain-like high-molecular polymer with branched chains, and can have many different average relative molecular weights which may be very large. Also, the PEIE can be configured to have different concentrations, is rich in hydroxyl groups and is a macromolecule with very large polarity. Generally, aqueous solutions with different concentrations of the PEIE are used in the experiment.

The addition material used in the method according to the invention is not limited to the PEIE. The PEIE is a macromolecule which contains organic amine group structures and is rich in hydroxyl groups. Under verification of a series of experiments in combination with theoretical derivation, the macromolecules, such as PEIE, containing organic amine group structures and being rich in hydroxyl groups, has a limiting effect on the platinum catalyst, which hinders the normal catalytic reaction. Also, compared with the macromolecular structure of the silicone rubber, the used macromolecule of the PEIE having an average molecular weight of about 70000 is more beneficial to the wrapping of the platinum catalyst, and can limits the diffusion and contributing range of the platinum by cooperating with the related functional groups so as to achieve the effect of weakening the cross-linking. In addition, the hydroxyl functional groups with extremely strong electronegativity may also form a nucleophilic reaction with silicon atoms which comes from curing agent in the curing agent and are originally to react with the double bonds of the monomer, which inhibits the monomer addition and weakens the cross-linking effect.

The addition material used in the method according to the invention may include a molecule with organic amine groups similar to the PEIE, a material capable of limiting the cross-linking reaction catalyst (diffusion, activity), a material capable of influencing the hydrogenation ability of platinum by functional groups such as a sulfur or nitrogen lone pair, or a material with a functional group having extremely strong electronegativity to enable nucleophilic reaction and a macromolecular chain structure.

The object regulated and modified by the method according to the invention is a polymer with a specific reaction mechanism. The specific reaction mechanism is an addition polymerization reaction with catalyst catalysis. What the invention emphasizes is a method, the application range of which is not limited only to the silicone rubber like the PDMS. The polymer forming process in which a nucleophilic addition reaction with catalyst catalysis occurs in the cross-linking process similar to the PDMS can be regulated, and the cross-linked structure is reinforced or weakened by tunning the cross-linking degree to restrain or liberate the space structure of the molecule, so that regulation and even modification can be mechanically achieved. Any material can be regulated and modified by the method according to the invention as long as similar cross-linking reaction and nucleophilic reaction with catalyst catalysis exist in the forming process of the material.

The principle of the regulation and modification method of the invention is as follows: the activity of the catalyst (for example, diffusion of the catalyst) is controlled in the reaction process by control the contributing range of the catalyst; or the catalyst is allowed to participate in a reaction unrelated to the cross-linking reaction to generate other groups such that the catalyst is deactivated; or the catalyst is wrapped in other macromolecules such that the catalyst is fixed at a specific position with its catalytic effect controlled. Finally, the matrix material is cured in time so that the solid with controlled performance can be obtained.

According to the invention, the amount of the addition material (i.e., the concentration) can affect the catalytic effect of Pt, affect the cross-linking effect and thus affect the performance of the polymer in different extent. The general rule is that the more the amount of the addition material is, the larger the concentration is, the stronger the catalyst Pt is controlled and wrapped in an embedded manner, the more the cross-linking degree is weakened, the more unstable the resulting structure is, and the lower the Young's modulus of the polymer is, namely, the softer the polymer is, and the larger the stretchability is.

According to the invention, the molecular weight of the addition material can also affect the catalytic effect of Pt, affect the cross-linking effect and thus affect the performance of the polymer in different extent. Generally, the larger the molecular weight is, the longer the main chain and the branched chain are, the more the contained amine groups are, the more the Pt catalysis is limited, the more the cross-linking degree is weakened, the more unstable the resulting structure is, and the lower the Young's modulus of the polymer is, namely, the softer the polymer is, and the larger the stretchability is.

According to the invention, under the condition that the polymer monomer mass is fixed, there is an upper limit to the regulation and modification effect achieved by the addition material. When the addition amount of the addition material exceeds the upper limit threshold, the catalyst Pt is almost completely limited so that the cross-linking reaction cannot be catalyzed and the polymer is not able to be cured.

According to the invention, in addition to the addition material, external conditions such as the mixing degree (the diffusion degree of the addition material), the curing temperature and the curing time can affect the mechanical properties of the resulting polymer: (1) the higher the mixing degree is, the more the Pt is wrapped by the addition material, the more the cross-linking degree and the larger cross-linking area are weakened, the lower the Young's modulus of the polymer is, and the softer the polymer is, and the stretchability is also improved; (2) the higher the curing temperature is, the faster the internal chemical reaction is, the more the cross-linking degree and the larger cross-linking area are strengthened, the higher the Young's modulus of the polymer is, and the stiffer the polymer is, and the stretchability is reduced; (3) the longer the curing time is, the more thoroughly the internal chemical reaction goes on, the more the cross-linking degree and the larger cross-linking area are strengthened, the higher the Young's modulus of the polymer is, and the stiffer the polymer is, and the stretchability is reduced.

According to the method in the invention, when the implement object is a multi-component polymer, the mixing sequence of different components and the addition material can affect the mechanical properties of the resulting polymer.

In order to describe the method in the invention in more detail, further detailed description is provided below with reference to specific embodiments.

### Embodiment 1

Firstly, components of the PDMS are weighed according to a certain mass ratio, and the core components are a silicone rubber matrix and a curing agent, which form an addition polymerization system. It is noted that the mass ratio can be adjusted, and accordingly, the mechanical properties of the resulting polymer may be influenced.

Then, PEIE as an addition material is added to the addition polymerization system. The addition amount can be adjusted, and accordingly, the mechanical properties of the resulting polymer may be influenced. In addition, the molecular weight of the PEIE is 70000 to 110000. In this embodiment, the catalyst in the addition polymerization system of the polymer is a Pt catalyst.

Then, stirring operation is performed to enable the addition material PEIE to be uniformly mixed, and for the PDMS, the stirring speed and the stirring time are respectively 200 rpm and 5 min, which can be adjusted according to actual conditions. The mixing degree may affect the mechanical properties of the resulting polymer.

Next, bubbles generated in the stirring process may be removed by vacuuming, placing, freezing and other methods. The processing time should not be too long, and can be, for example, 10 min, otherwise, the resulting polymer performance will go down. If little or even no bubbles exist in the polymer, the next step can be performed after the bubbles disappear naturally.

Finally, curing process is performed. The curing temperature is 90 °C and the curing time is 3h. The temperature and time can be adjusted, and accordingly, the mechanical properties of the polymer may be influenced.

The properties of the silicone rubber final product obtained in the embodiment are as follows: the Young's modulus can be adjusted between tens of kilopascals and a number of megapascals; the stretch ratio is significantly increased, and the maximum stretch ratio may be four times as large as the original; and the surface adhesion force is enhanced, and may reach up to 1.5 N in the adhesion test. Compared with the silicone rubber which is not added with the addition material for modification, the flexibility (Young's modulus), the stretchability and the surface adhesion force of the resulting silicone rubber are improved.

### Embodiment 2

Firstly, components of the PDMS are weighed according to a certain mass ratio, and the core components are a silicone rubber matrix and a curing agent, which form an addition polymerization system. It is noted that the mass ratio can be changed, and accordingly, the mechanical properties of the resulting polymer may be influenced.

Then, polyethyleneimine (PEI) as an addition material is added to the addition polymerization system. The addition material in this embodiment differs from the addition material in the embodiment 1 in that the molecular weight of the PEI may be as low as 1200, as high as tens of thousands (e.g., 60000) and even up to hundreds of thousands (e.g., 750000). The addition amount of the addition material can be adjusted, and accordingly, the mechanical properties of the resulting polymer may be influenced. In the specific embodiment of the invention, the molecular weight of the PEI is 70000 to 750000 and the average molecular weight of the PEI is 180000. In this embodiment, the catalyst in the addition polymerization system of the polymer is a Pt catalyst.

Then, stirring operation is performed to enable the addition material PEIE to be uniformly mixed, and for the PDMS, the stirring speed and the stirring time are respectively 200 rpm and 5 min, which can be adjusted according to actual conditions. The mixing degree may affect the mechanical properties of the resulting polymer.

Next, bubbles generated in the stirring process may be removed by vacuuming, placing, freezing and other methods. The processing time should not be too long, and can be, for example, 10 min, otherwise, the resulting polymert performance will go down. If little or even no bubbles exist in the polymer, the next step can be performed directly or after the bubbles disappear naturally.

Finally, curing process is performed. The curing temperature is 90 °C and the curing time is 3h. The temperature and time can be adjusted, and accordingly, the mechanical properties of the polymer may be influenced.

The properties of the silicone rubber final product obtained in this embodiment are as follows: the Young's modulus can be adjusted between tens of kilopascals and a number of megapascals; the stretch ratio is significantly increased, and the maximum stretch ratio may be three times as large as the original; and the surface adhesion force is enhanced, and may reach 1 N in the adhesion test. Compared with the silicone rubber which is not added with the addition material for modification, the flexibility (Young's modulus), the stretchability and the surface adhesion force of the resulting silicone rubber are improved. The modification effect of the PEI differs from that of the PEIE, in that in a case of the same mass of the PDMS substrate and the same amount of the addition material, the Young's modulus of the resulting modified PDMS by the PEI is lower than that of the resulting modified PDMS by the PEIE, i.e., softer in the flexibility as well as the surface adhesion force, but the modification effect on the stretchability by PEI is lower than the modification effect on the stretchability by PEIE.

In view of complex or high-cost manufacturing process of the existing flexible and stretchable substrate, the invention provides a method for fabricating a flexible/stretchable electronic substrate which is simple and convenient, capable of adjusting the properties and low-cost, and aims at tuning the flexibility, adhesion force, stretchability and Young's modulus of the macromolecular flexible material only by simple processes to tune various mechanical performance parameters as needed so as to meet the requirement for packaging the flexible/stretchable electronic device in the experiment. At present, the properties of the modified polymer can be maintained at least for one year, and thus the modified polymer has a great application prospect in the field of flexible/stretchable electronics.

According to the invention, modification of the polymer is multi faceted, including flexibility, stretchability, adhesion force, transparency and the like. The flexibility and the Young's modulus are complementary with higher flexibility corresponding to smaller Young's modulus. The stretchability is embodied in the stretch ratio. The organic amine polymer added in the invention is beneficial to increase the adhesion force of the polymer surface and provides a very good epidermal electronic material.

The invention makes a great contribution to the field of flexible/stretchable electronics, in which the epidermal electronic needs to be very approximate to the skin, and thus the invention can meet the requirement on the Young's modulus. The high-viscosity elastic mixture with tunable flexibility, adhesion force and Young's modulus has a high transparency, which increases the visibility of the flexible/stretchable electronic device and is convenient for the real-time monitoring.

The method according to the invention can be applied to preparation in the flexible/stretchable electronics which may bring about a revolution in electronic technology, has aroused widespread concern around the world and has been rapidly developed.

While particular embodiments of the invention have been shown and described, it will be obvious to those skilled in the art that changes and modifications may be made without departing from the spirit and scope of the invention.

## Claims

1. A method for controlling and modifying a polymer, **characterized by** adding an addition material to the addition polymerization system of the polymer to change the cross-linking degree of the polymer, to reinforce or to weaken the cross-linked structure of the polymer and to restrain or to liberate the space structure of the polymer molecule so as to regulate or modify properties of the polymer, wherein
the addition polymerization system of the polymer takes a Pt catalyst as a catalyst to catalyze the polymer monomer to generate nucleophilic addition reaction;
the addition material is a macromolecule with an organic amine group, or a macromolecule with a sulfur-containing functional group, or a macromolecule with a nitrogen lone electron pair, or a macromolecule with a functional group having extremely strong electronegativity to enable nucleophilic reaction, and the addition material is of a macromolecular chain structure; and
the macromolecular chain refers to a macromolecule with an average molecular weight of 70.000 to 200.000.

2. The method of claim 1, **characterized in that** the functional group, which exhibits an extremely strong electronegativity to enable nucleophilic reaction, is a hydroxyl functional group having extremely strong electronegativity to enable nucleophilic reaction.

3. The method of claim 1 or 2, **characterized in that** the more the amount of the addition material is, the larger the concentration is, the stronger the control and package in an embedded manner for the catalyst Pt is, the more the cross-linking degree is weakened, the more unstable the resulting structure is, the smaller the Young's modulus of the polymer is, the softer the polymer is, and the larger the stretchability is.

4. The method of claim 3, **characterized in that** the larger the molecular weight of the addition material is, the longer the main chain and the branched chain are, the more the contained amine groups are, the more the Pt catalysis is limited, and the more the cross-linking degree is weakened.

5. The method of any one of claims 1-4, **characterized in that** the mixing degree of the addition polymerization system of the polymer, the diffusion degree of the addition material, the curing temperature of the addition polymerization system of the polymer and the curing time of the addition polymerization system of the polymer are all capable of affecting mechanical properties of the resulting polymer as below:
(1) the higher the mixing degree of the addition polymerization system of the polymer is, the more the diffusion degree of the addition material is, the more the catalyst Pt is wrapped by the addition material, the more the cross-linking degree of the polymer and the cross-linking area of the polymer are weakened, the lower the Young's modulus of the polymer is, the softer the polymer is, and the larger the stretchability is;
(2) the higher the curing temperature of the addition polymerization system of the polymer is, the faster the internal chemical reaction is, the more the cross-linking degree of the polymer and the cross-linking area of the polymer are strengthened, the higher the Young's modulus of the polymer is, the stiffer the polymer is, and the smaller the stretchability is; and
(3) the longer the curing time of the addition polymerization system of the polymer is, the more thoroughly the internal chemical reaction goes on, the more the cross-linking degree of the polymer and the cross-linking area of the polymer are strengthened, the higher the Young's modulus of the polymer is, the stiffer the polymer is, and the smaller the stretchability is.

6. The method of any one of claims 1-5, **characterized in that** under the condition that the polymer monomer mass is fixed, there is an upper limit to the regulation and modification effect achieved by the addition material, and when the addition amount of the addition material exceeds the upper limit value, the catalyst Pt is completely limited and is unable to catalyze the addition polymerization reaction.

7. The method of any one of claims 1-6, **characterized in that** the addition material is ethoxylated polyethyleneimine, and the polymer reaction system is a polydimethylsiloxane addition polymerization system.
